# EUROPEAN PATENT SPECIFICATION

(11) **EP 3 904 818 B1**
(45) Date of publication and mention of the grant of the patent: **10.01.2024**
(21) Application number: 20172413.5
(22) Date of filing: 30.04.2020
(51) Int. Cl.: F28F 7/02

(54) **ELECTRIC ARRANGEMENT COMPRISING A HEAT EXCHANGER**
ELEKTRISCHE ANORDNUNG MIT EINEM WÄRMETAUSCHER
AGENCEMENT ÉLECTRIQUE AVEC UN ÉCHANGEUR DE CHALEUR

(43) Date of publication of application: 03.11.2021
(73) Proprietor: Hitachi Energy Ltd, 8050 Zürich (CH)
(72) Inventor: BRODEUR, Samuel, Saint-Bruno-de-Montarville Québec J3V 6N1 (CA); AGUIRRE, Miguel, 14001 Cordoba, Cordoba (ES); BEL FDHILA, Rebei, 724 76 Västerås (SE); THOLENCE, Frederic, 43163 Mölndal (SE); SAND, Ulf, 724 63 Västerås (SE); MALEKSAEEDI, Saeed, N2V 2M5 Waterloo (CA)
(74) Representative: Valea AB

(56) References cited:
- EP-A1- 2 466 086
- EP-A1- 3 431 911
- US-A1- 2018 187 984
- US-A1- 2020 033 070

## Description

### Technical Field

The present disclosure generally relates to heat exchangers for electric arrangements. In particular, an electric arrangement comprising a heat exchanger is provided.

### Background

Transformer oil used in power transformers is often cooled by cooling arrangements, such as radiators or coolers. These cooling arrangements often constitute a significant part of the footprint of the transformer.

US 2020033070 A1 discloses a heat exchanger including an enclosure and a minimal surface structure within the enclosure. The enclosure includes a first inlet, a first outlet, a second inlet, and a second outlet. The minimal surface structure separates a first volume and a second volume within the enclosure. The first inlet and the first outlet are in fluid communication with the first volume, and the second inlet and a second outlet are in fluid communication with the second volume. The first and second volumes are separated from mixing with each other.

### Summary

One object of the present disclosure is to provide an electric arrangement comprising a heat generating electric component and a heat exchanger, which electric arrangement enables an improved cooling of the electric component.

A further object of the present disclosure is to provide an electric arrangement comprising a heat exchanger, which electric arrangement enables simple maintenance.

A still further object of the present disclosure is to provide an electric arrangement comprising a heat exchanger, which electric arrangement has a compact design.

A still further object of the present disclosure is to provide an electric arrangement comprising a heat exchanger, which electric arrangement has a low weight.

A still further object of the present disclosure is to provide an electric arrangement comprising a heat exchanger, which electric arrangement requires low amounts of dielectric cooling fluid.

A still further object of the present disclosure is to provide an electric arrangement comprising a heat exchanger, which electric arrangement solves several or all of the foregoing objects in combination.

According to one aspect, there is provided an electric arrangement comprising a casing; a heat generating electric component arranged inside the casing; and a heat exchanger comprising a three dimensional lattice cell structure, the three dimensional lattice cell structure being arranged to conduct a dielectric cooling fluid from the casing at an exterior side of the casing for heat exchange with an ambient fluid, and back towards the casing for cooling of the electric component.

The three dimensional lattice cell structure increases the surface areas exposed for heat transfer. Heat transfer efficiency is thus improved by means of the three dimensional lattice cell structure. Consequently, cooling efficiency of the electric component is also improved. Due to the high heat transfer efficiency of the heat exchanger, the amount of cooling fluid can also be relatively low. The three dimensional lattice cell structure further provides a good mixing environment and a low increase of pressure drop.

The three dimensional lattice cell structure further enables a compact design of the heat exchanger. As a consequence, also the electric arrangement can be made more compact. Alternatively, the electric arrangement can be made more powerful with the same footprint.

Furthermore, by means of the three dimensional lattice cell structure, the electric arrangement can be made lighter. This in turn reduces transportation costs. The three dimensional lattice cell structure also enables the electric arrangement to be manufactured more easily.

The three dimensional lattice cell structure may comprise a periodic pattern in each of three different directions. Each periodic pattern may comprise at least three periods. The directions may be substantially orthogonal, or orthogonal. The three dimensional lattice cell structure comprises a plurality of cells. The cells may be arranged substantially orthogonally, or orthogonally, in two or three directions.

The three dimensional lattice cell structure may define an interior lattice cell structure volume. The interior lattice cell structure volume may be continuous or discontinuous. Thus, the interior lattice cell structure volume may form a continuous labyrinth network for the cooling fluid, or may form several parallel labyrinth networks for the cooling fluid. In any case, the interior lattice cell structure volume may be in fluid communication with the interior of the casing.

The three dimensional lattice cell structure may define an exterior lattice cell structure volume. The exterior lattice cell structure volume may be continuous or discontinuous. Thus, the exterior lattice cell structure volume may form a continuous labyrinth network for the ambient fluid, or may form several parallel labyrinth networks for the ambient fluid. In any case, the exterior lattice cell structure volume may be in fluid communication with the ambient fluid.

The cooling fluid may be a dielectric liquid, such as dielectric oil. The ambient fluid may be ambient air or water.

The casing and the three dimensional lattice cell structure may define a circuit for the cooling fluid. The heat exchanger may comprise one or more inlets and one or more outlets. In this case, the three dimensional lattice cell structure may be arranged fluidly between the one or more inlets and the one or more outlets. Each inlet and each outlet may be arranged fluidly between the casing and the three dimensional lattice cell structure. The inlet may be arranged geodetically higher than the outlet.

The casing may comprise a plurality of walls. The three dimensional lattice cell structure may be embedded in one of the walls. Alternatively, or in addition, the three dimensional lattice cell structure may be welded or bolted to one of the walls.

The heat exchanger may comprise a plurality of bodies, each body comprising a three dimensional lattice cell structure or a two dimensional lattice structure. Each body may be integrally formed. For example, each body may be additively manufactured. One example of additive manufacture is 3D printing.

Each body may be detachably connected to the casing. This lowers assembly time and facilitates repair. For example, one of the bodies may be replaced without replacing the remaining bodies. One reason for needing replacement may be leakage.

Each body may be a panel comprising a two dimensional lattice cell structure. The two dimensional lattice cell structure may comprise a periodic pattern in each of two different directions. Each periodic pattern may comprise at least three periods. The directions may be substantially orthogonal, or orthogonal.

The panels may be arranged in a stack to form the three dimensional lattice cell structure. In this case, cells of adjacent panels may be aligned or offset. Alternatively, each body may be elongated, such as pipe-shaped.

The three dimensional lattice cell structure may comprise a triply periodic substantially minimal surface, such as a triply periodic minimal surface, TPMS. The TPMS may for example comprise a Schwarz P surface. The triply periodic substantially minimal surface may be a surface that is similar to a TPMS, but that does not fulfill the requirement to be named TPMS.

The three dimensional lattice cell structure may comprise non-flat and flow-promoting ends. The ends may for example be cones or hemispheres. Each end may close a respective cell of the three dimensional lattice cell structure.

The heat exchanger may comprise two three dimensional lattice cell structures arranged in parallel, and each three dimensional lattice cell structure may be arranged to conduct the cooling fluid from the casing at the exterior side of the casing for heat exchange with an ambient fluid, and back towards the casing for cooling of the electric component. In this case, the heat exchanger may comprise a plurality of inlets and a plurality of outlets. Each pair of an inlet and an outlet may be associated with one three dimensional lattice cell structure. Each three dimensional lattice cell structure may be arranged fluidly between the associated inlet and outlet.

The heat exchanger may further comprise pipes for conducting the ambient fluid through the three dimensional lattice cell structure. In this case, the ambient fluid may flow through the three dimensional lattice cell structure both inside and outside the pipes. That is, the ambient fluid may flow both inside the pipes and inside the exterior lattice cell structure volume. This further increases the heat transfer between the cooling fluid and the ambient fluid. The pipes may extend through cells of the three dimensional lattice cell structure.

As an alternative, the pipes may be heat pipes containing two-phase coolant. In this case, an interior surface of the heat pipes may comprise a capillary structure. Sections of the heat pipes outside the three dimensional lattice cell structure may constitute a condenser region and sections of the heat pipes inside the three dimensional lattice cell structure may constitute an evaporator region. In the evaporator region of the heat pipes adjacent to the cooling fluid, the two-phase coolant absorbs heat from the cooling fluid and evaporates. The vapour travels inside the heat pipes, but outside the capillary structure, to the lower temperature condenser region of the heat pipes outside the three dimensional lattice cell structure, where the vapour condenses back to liquid and is absorbed by the capillary structure. The liquid then travels inside the capillary structure from the condenser region back to the evaporator region.

The heat exchanger may comprise a guiding structure inside the three dimensional lattice cell structure, the guiding structure being arranged to guide the cooling fluid along a defined path inside the three dimensional lattice cell structure. The path may pass through substantially the entire, or the entire, three dimensional lattice cell structure. The path may be a serpentine path. The guiding structure may comprise a plurality of plates.

The electric arrangement may further comprise a pump arrangement arranged to generate a flow of the cooling fluid through the three dimensional lattice cell structure. This further improves the heat exchange. The pump arrangement may comprise one or more pumps. Alternatively, the electric arrangement may be configured to circulate the cooling fluid only by means of natural convection, i.e. without any mechanical assistance for circulating the cooling fluid.

The electric arrangement may further comprise a fan arrangement arranged to generate a flow of the ambient fluid in the three dimensional lattice cell structure. This further improves the heat exchange. The fan arrangement may be arranged to generate a flow of the ambient fluid through the three dimensional lattice cell structure. The fan arrangement may comprise one or more fans.

The fan arrangement may be arranged to generate a flow of the ambient fluid in the three dimensional lattice cell structure in at least two different directions, such as in at least three different directions. The directions may be substantially orthogonal, or orthogonal.

The electric arrangement may be a high voltage static electric induction system, such as a power transformer or a shunt reactor. As used herein, a high voltage may be at least 30 kV, such as at least 100 kV. Although the electric arrangement is mainly described as a power transformer, the electric arrangement is not limited to a power transformer.

### Brief Description of the Drawings

Further details, advantages and aspects of the present disclosure will become apparent from the following embodiments taken in conjunction with the drawings, wherein:
- Fig. 1:: schematically represents a side view of an electric arrangement comprising a heat exchanger;
- Fig. 2:: schematically represents a partial perspective view of a three dimensional lattice cell structure of the heat exchanger in Fig. 1;
- Fig. 3:: schematically represents a side view of an electric arrangement comprising a further example of heat exchanger;
- Fig. 4:: schematically represents a partial perspective view of the heat exchanger in Fig. 3;
- Fig. 5:: schematically represents a side view of an electric arrangement comprising a further example of heat exchanger;
- Fig. 6:: schematically represents a side view of an electric arrangement comprising a further example of heat exchanger;
- Fig. 7:: schematically represents a side view of an electric arrangement comprising a further example of heat exchanger;
- Fig. 8:: schematically represents a perspective view of a panel of the heat exchanger in Fig. 7;
- Fig. 9:: schematically represents a front view of the panel in Fig. 8;
- Fig. 10:: schematically represents a side view of an electric arrangement comprising a further example of heat exchanger; and
- Fig. 11:: schematically represents a front view of the electric arrangement in Fig. 10.

### Detailed Description

In the following, an electric arrangement comprising a heat exchanger, a panel for a heat exchanger, and a heat exchanger comprising a plurality of panels, will be described. The same or similar reference numerals will be used to denote the same or similar structural features.

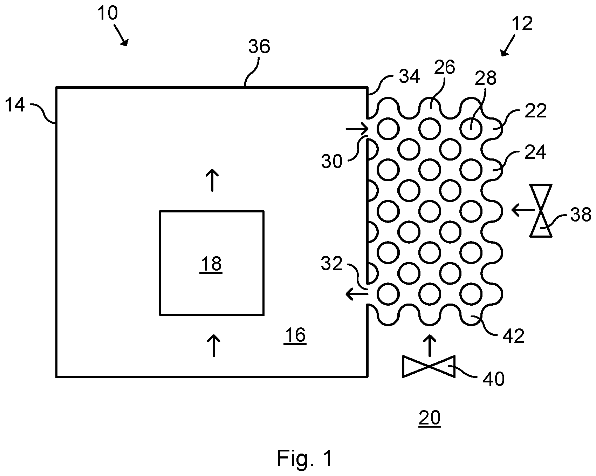

Fig. 1 schematically represents a side view of a power transformer 10 comprising a heat exchanger 12. The power transformer 10 is one example of an electric arrangement. The power transformer 10 comprises a casing 14. The casing 14 contains dielectric oil 16. Dielectric oil 16 is one example of a dielectric cooling fluid.

The power transformer 10 further comprises an electric component 18. The electric component 18 is arranged inside the casing 14. The electric component 18 is submerged in the oil 16. The electric component 18 generates heat during operation of the power transformer 10. The electric component 18 may for example be a winding of the power transformer 10.

Fig. 1 further indicates ambient air 20 outside the casing 14. The air 20 may be the atmosphere. The air 20 is one example of an ambient fluid.

The heat exchanger 12 comprises a three dimensional lattice cell structure 22. The three dimensional lattice cell structure 22 comprises a plurality of cells 24. The three dimensional lattice cell structure 22 of this example comprises a triply periodic substantially minimal surface having an elongated Schwarz P surface. The three dimensional lattice cell structure 22 may be for example be 3D printed.

The three dimensional lattice cell structure 22 defines an interior lattice cell structure volume 26 and an exterior lattice cell structure volume 28. The interior lattice cell structure volume 26 and the exterior lattice cell structure volume 28 constitute two separate networks. Oil 16 from the interior of the casing 14 can flow into and out from the interior lattice cell structure volume 26. The air 20 can flow into and out from the exterior lattice cell structure volume 28. In this example, each of the interior lattice cell structure volume 26 and the exterior lattice cell structure volume 28 is continuous.

The three dimensional lattice cell structure 22 is thus configured to conduct the oil 16 from the casing 14 to an exterior side of the casing 14 and back towards the casing 14. The three dimensional lattice cell structure 22 comprises large surface areas for heat exchange between the oil 16 and the air 20. Tests have shown that the heat exchanger 12 has a very high heat transfer coefficient. A number of radiators can thereby be reduced. Despite the large surface areas for heat exchange, the three dimensional lattice cell structure 22 is also compact.

The heat exchanger 12 comprises an inlet 30 and an outlet 32. Each of the inlet 30 and the outlet 32 is arranged fluidly between the casing 14 and the three dimensional lattice cell structure 22. The inlet 30 is arranged geodetically higher than the outlet 32.

As shown in Fig. 1, the casing 14 and the three dimensional lattice cell structure 22 define a circuit for the oil 16 comprising the casing 14, the inlet 30, the three dimensional lattice cell structure 22 and the outlet 32. In Fig. 1, the oil 16 flows in this circuit in a clockwise direction during operation of the power transformer 10, as indicated with arrows. That is, the oil 16 is heated by the electric component 18. The hot oil 16 then enters the three dimensional lattice cell structure 22 through the inlet 30. The hot oil 16 in the interior lattice cell structure volume 26 is then cooled by heat exchange with the air 20 in the exterior lattice cell structure volume 28. Cold oil 16 then exits the three dimensional lattice cell structure 22 through the outlet 32. The electric component 18 is then cooled by the cold oil 16.

The casing 14 comprises four side walls 34 and a top wall 36. In the example in Fig 1, the three dimensional lattice cell structure 22 is embedded in one of the side walls 34. The three dimensional lattice cell structure 22 may for example be welded or bolted to the side wall 34.

The power transformer 10 further comprises a fan arrangement. The fan arrangement comprises a front fan 38 and a bottom fan 40. The front fan 38 is configured to blow the air 20 horizontally into the three dimensional lattice cell structure 22. The bottom fan 40 is configured to blow the air 20 vertically into the three dimensional lattice cell structure 22 from below. The cooling efficiency of the power transformer 10 can easily be regulated by adjusting the speeds of the fans 38, 40. The fan arrangement may also comprise a further fan (not shown) that blows the air 20 in a further horizontal direction, perpendicular to the blowing direction of the front fan 38.

The three dimensional lattice cell structure 22 further comprises non-flat and flow-promoting ends 42. Each end 42 closes a respective cell 24 of the three dimensional lattice cell structure 22.

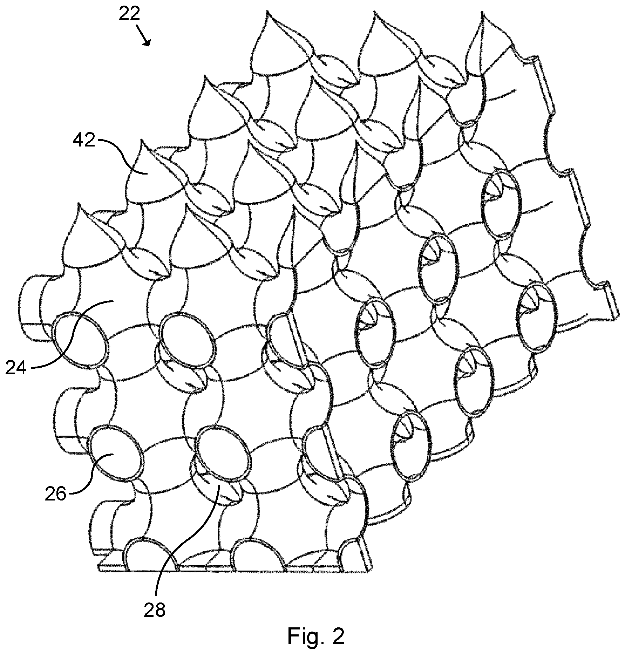

Fig. 2 schematically represents a partial perspective view of the three dimensional lattice cell structure 22 of the heat exchanger 12 in Fig. 1. As shown in Fig. 2, the three dimensional lattice cell structure 22 comprises a periodic pattern in each of three orthogonal directions. Each periodic pattern comprises a plurality of periods. The cells 24 are arranged orthogonally in three directions. As shown in Fig. 2, each non-flat and flow-promoting end 42 of this example has a shape of a cone.

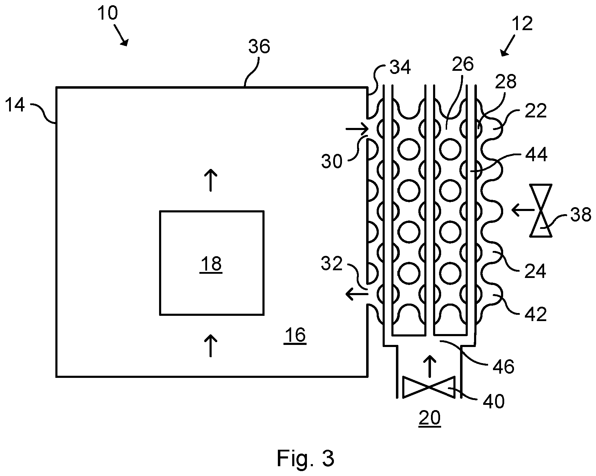

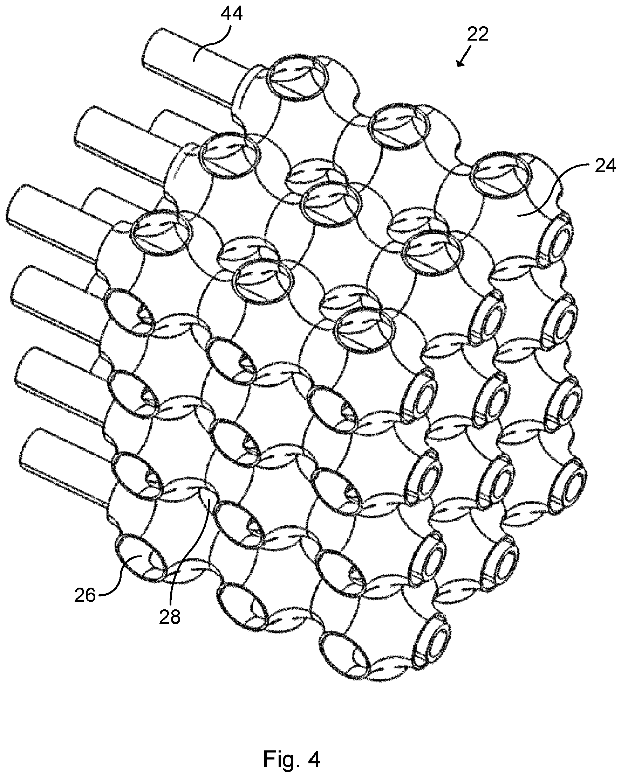

Fig. 3 schematically represents a side view of a power transformer 10 comprising a further example of heat exchanger 12 and Fig. 4 schematically represents a partial perspective view of the heat exchanger 12 in Fig. 3. With collective reference to Figs. 3 and 4, mainly differences with respect to Figs. 1 and 2 will be described.

The heat exchanger 12 in Figs. 3 and 4 comprises a plurality of pipes 44. In this example, each pipe 44 is straight and vertically oriented. The pipes 44 are configured to guide the air 20 through the three dimensional lattice cell structure 22.

Each pipe 44 extends through the entire three dimensional lattice cell structure 22. In this example, each pipe 44 extends through the cells 24 of the three dimensional lattice cell structure 22.

The heat exchanger 12 in Fig. 3 further comprises a manifold 46. The manifold 46 branches into the pipes 44. The bottom fan 40 is arranged to blow air 20 through the pipes 44 via the manifold 46. The front fan 38 is arranged to blow air 20 into the three dimensional lattice cell structure 22 in the same manner as in Fig. 1. Thus, in Fig. 3, heat exchange between the oil 16 and the air 20 takes place both between the interior lattice cell structure volume 26 and the exterior lattice cell structure volume 28 and between the interior lattice cell structure volume 26 and the pipes 44. In this way, heat transfer efficiency between the oil 16 and the air 20 is further increased. The heat exchanger 12 in Fig. 3 also has a simple structure.

The pipes 44 in Figs. 3 and 4 may alternatively be configured as heat pipes containing two-phase coolant and provided with an interior capillary structure. In this case, the pipes 44 may extend further outside the three dimensional lattice cell structure 22.

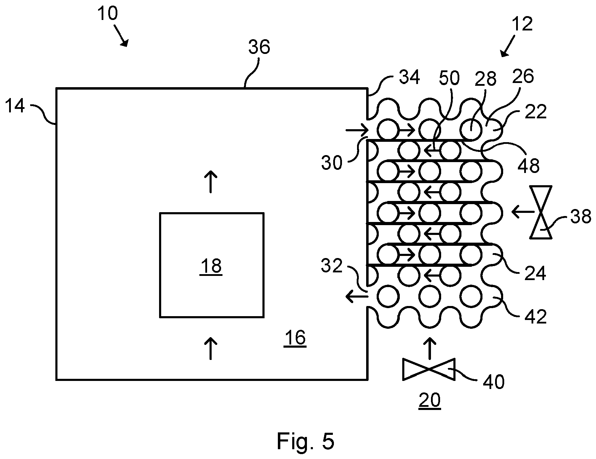

Fig. 5 schematically represents a side view of a power transformer 10 comprising a further example of heat exchanger 12. Mainly differences with respect to Figs. 1 and 2 will be described.

The heat exchanger 12 in Fig. 5 further comprises a plurality of plates 48. The plates 48 define a path 50 inside the interior lattice cell structure volume 26. As shown in Fig. 5, the path 50 is serpentine-shaped. The plates 48 are one example of a guiding structure for guiding the oil 16 inside the three dimensional lattice cell structure 22.

As shown in Fig. 5, the plates 48 force the oil 16 to a distal (with respect to the casing 14) region of the three dimensional lattice cell structure 22. The plates 48 thereby further improve heat transfer between the oil 16 and the air 20 in the three dimensional lattice cell structure 22.

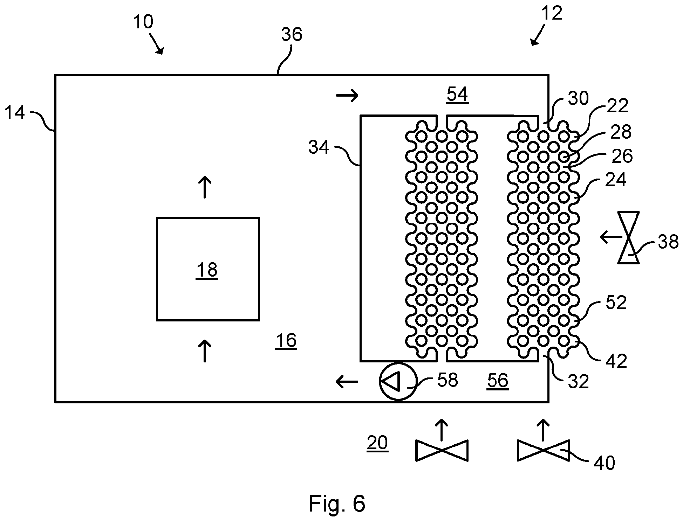

Fig. 6 schematically represents a side view of a power transformer 10 comprising a further example of heat exchanger 12. Mainly differences with respect to Figs. 1 and 2 will be described.

The heat exchanger 12 in Fig. 6 comprises a plurality of bodies 52. Each body 52 comprises a three dimensional lattice cell structure 22. The bodies 52 thus form a plurality of parallel networks for the oil 16. Each three dimensional lattice cell structure 22 is configured to conduct the oil 16 from the casing 14 at the exterior side of the casing 14 for heat exchange with the air 20, and back towards the casing 14 for cooling the electric component 18.

Each body 52 is detachably connectable to the casing 14. The power transformer 10 can function even when one of the bodies 52 is removed for replacement. In this case, openings into the body 52 removed for replacement need to be closed. Replacement of only one body 52 is simpler and cheaper.

The bodies 52 do however not need to be directly connectable to the casing 14. As shown in Fig. 6, the heat exchanger 12 comprises an upper manifold 54 and a lower manifold 56. The upper manifold 54 branches into the inlet 30 of each body 52. The outlet 32 of each body 52 are joined by the lower manifold 56. Each body 52 is detachably connectable to the upper manifold 54 and the lower manifold 56.

The power transformer 10 in Fig. 6 further comprises a pump 58. The pump 58 constitutes one example of a pump arrangement. The pump 58 is configured to selectively enhance a flow of the oil 16 through the three dimensional lattice cell structure 22. The cooling efficiency of the power transformer 10 can easily be regulated by adjusting the speed of the pump 58. In the example in Fig. 6, the pump 58 is arranged in the lower manifold 56, i.e. downstream of the bodies 52.

The power transformer 10 in Fig. 6 further comprises a plurality of bottom fans 40. Each bottom fan 40 is arranged below one of the three dimensional lattice cell structure 22. One bottom fan 40 is associated with each three dimensional lattice cell structure 22.

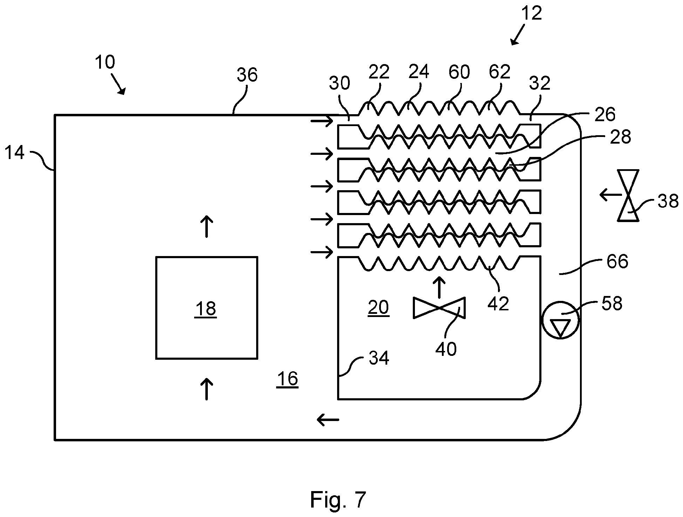

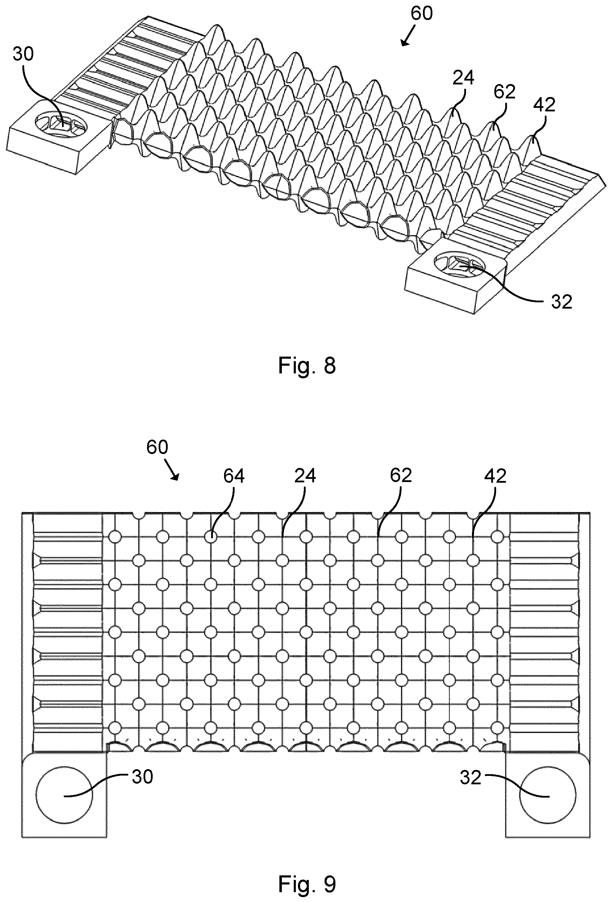

Fig. 7 schematically represents a side view of a power transformer 10 comprising a further example of heat exchanger 12. The heat exchanger 12 comprises a plurality of panels 60. Fig. 8 schematically represents a perspective view of one of the panels 60 of the heat exchanger 12 in Fig. 7, and Fig. 9 schematically represents a front view of the panel 60 in Fig. 8. With collective reference to Figs. 7-9, mainly differences with respect to Fig. 6 will be described.

The panels 60 are further examples of bodies according to the present disclosure. Each panel 60 is detachably connectable to the casing 14. Each panel 60 comprises a two dimensional lattice cell structure 62. Furthermore, each panel 60 in this example comprises a plurality of holes 64. The holes 64 are arranged between the cells 24.

The panels 60 are arranged in a stack. In this way, the panels 60 jointly form a three dimensional lattice cell structure 22. The distance between the panels 60 may be varied, e.g. optimized for an improved heat transfer. As shown in Fig. 7, each panel 60 is horizontally oriented. In the example in Figs. 7-9, the interior lattice cell structure volume 26 is discontinuous. The three dimensional lattice cell structure 22 thus forms a plurality of parallel labyrinth networks for the oil 16, i.e. one network in each panel 60.

By means of the holes 64, the exterior lattice cell structure volume 28 is continuous. However, the panel 60 does not need to comprise the holes 64, for example if the panel 60 is made of sheet metal. In this case, the exterior lattice cell structure volume 28 would be discontinuous between the panels 60.

The panels 60 are arranged in a dense configuration. In this example, the panels 60 are overlapping. That is, cells 24 of one panel 60 enter into respective spaces between cells 24 of an adjacent panel 60. Thus, the cells 24 of adjacent panels 60 are offset.

As an alternative, the non-flat ends 42 of the panels 60 may be replaced with flat ends. In this case, the panels 60 may be compactly arranged face-to-face with each other and the cells 24 of adjacent panels 60 do not need to be offset.

The heat exchanger 12 further comprises a conduit 66. The outlet 32 of each panel 60 is connected to the conduit 66. The conduit 66 transitions (as seen in the flow direction of the oil 16) from vertical to horizontal prior to connecting to the casing 14. The pump 58 is arranged in the conduit 66, here in the vertical section thereof. The bottom fan 40 is arranged vertically between the three dimensional lattice cell structure 22 and the horizontal section of the conduit 66.

The panel 60 according to Figs. 8 and 9 is merely one specific example. In particular, the design of the inlet 30 and the outlet 32 maybe modified.

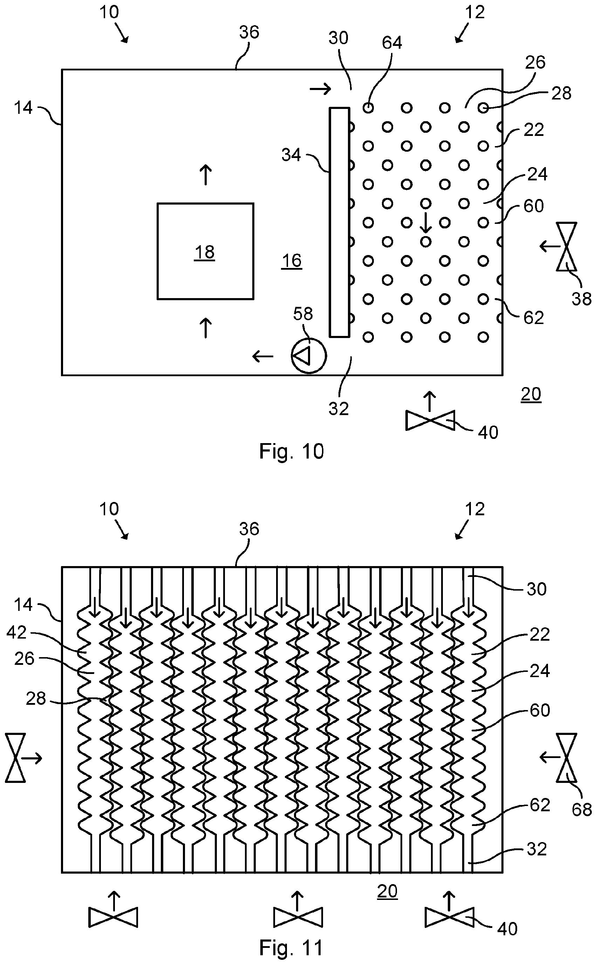

Fig. 10 schematically represents a side view of a power transformer 10 comprising a further example of heat exchanger 12 and Fig. 11 schematically represents a front view of the power transformer 10 in Fig. 10. With collective reference to Figs. 10 and 11, mainly differences with respect to Fig. 7 will be described.

The panels 60 used in Figs. 10 and 11 are of the same type as in Figs. 8 and 9. As shown in Figs. 10 and 11, each panel 60 is vertically oriented. The panels 60 are arranged in a stack to jointly form a three dimensional lattice cell structure 22.

Fig. 11 further shows that the fan arrangement comprises two further fans 68. Each fan 68 is arranged to blow the air 20 into the three dimensional lattice cell structure 22 in a horizontal direction, perpendicular to the blowing direction of the front fan 38.

While the present disclosure has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. An electric arrangement (10) comprising:
- a casing (14);
- a heat generating electric component (18) arranged inside the casing (14); and
- a heat exchanger (12) comprising a three dimensional lattice cell structure (22), the three dimensional lattice cell structure (22) being arranged to conduct a dielectric cooling fluid (16) from the casing (14) at an exterior side of the casing (14) for heat exchange with an ambient fluid (20), and back towards the casing (14) for cooling of the electric component (18).

2. The electric arrangement (10) according to claim 1, wherein the heat exchanger (12) comprises a plurality of bodies (52, 60), each body (52, 60) comprising a three dimensional lattice cell structure (22) or a two dimensional lattice structure (62).

3. The electric arrangement (10) according to claim 2, wherein each body (52, 60) is detachably connected to the casing (14).

4. The electric arrangement (10) according to claim 2 or 3, wherein each body is a panel (60) comprising a two dimensional lattice cell structure (62).

5. The electric arrangement (10) according to claim 4, wherein the panels (60) are arranged in a stack to form the three dimensional lattice cell structure (22).

6. The electric arrangement (10) according to any of the preceding claims, wherein the three dimensional lattice cell structure (22) comprises a triply periodic substantially minimal surface.

7. The electric arrangement (10) according to any of the preceding claims, wherein the three dimensional lattice cell structure (22) comprises non-flat and flow-promoting ends (42).

8. The electric arrangement (10) according to any of the preceding claims, wherein the heat exchanger (12) comprises two three dimensional lattice cell structures (22) arranged in parallel, and wherein each three dimensional lattice cell structure (22) is arranged to conduct the cooling fluid (16) from the casing (14) at the exterior side of the casing (14) for heat exchange with an ambient fluid (20), and back towards the casing (14) for cooling of the electric component (18).

9. The electric arrangement (10) according to any of the preceding claims, wherein the heat exchanger (12) further comprises pipes (44) for conducting the ambient fluid (20) through the three dimensional lattice cell structure (22).

10. The electric arrangement (10) according to any of the preceding claims, wherein the heat exchanger (12) comprises a guiding structure (48) inside the three dimensional lattice cell structure (22), the guiding structure (48) being arranged to guide the cooling fluid (16) along a defined path (50) inside the three dimensional lattice cell structure (22).

11. The electric arrangement (10) according to any of the preceding claims, further comprising a pump arrangement (58) arranged to generate a flow of the cooling fluid (16) through the three dimensional lattice cell structure (22).

12. The electric arrangement (10) according to any of the preceding claims, further comprising a fan arrangement (38, 40, 68) arranged to generate a flow of the ambient fluid (20) in the three dimensional lattice cell structure (22).

13. The electric arrangement (10) according to claim 12, wherein the fan arrangement (38, 40, 68) is arranged to generate a flow of the ambient fluid (20) in the three dimensional lattice cell structure (22) in at least two different directions.

## Patentansprüche

1. Elektrische Anordnung (10), die Folgendes umfasst:
- ein Gehäuse (14);
- eine wärmeerzeugende elektrische Komponente (18), die in dem Gehäuse (14) angeordnet ist; und
- einen Wärmetauscher (12), der eine dreidimensionale Gitterzellenstruktur (22) enthält, wobei die dreidimensionale Gitterzellenstruktur (22) dafür ausgelegt ist, ein dielektrisches Kühlungsfluid (16) von dem Gehäuse (14) zu einer Außenseite des Gehäuses (14) für einen Wärmeaustausch mit einem umgebenden Fluid (20) und zurück zu dem Gehäuse (14), um die elektrische Komponente (18) zu kühlen, zu leiten.

2. Elektrische Anordnung (10) nach Anspruch 1, wobei der Wärmetauscher (12) mehrere Körper (52, 60) umfasst, wobei jeder Körper (52, 60) eine dreidimensionale Gitterzellenstruktur (22) oder eine zweidimensionale Gitterstruktur (62) enthält.

3. Elektrische Anordnung (10 nach Anspruch 2, wobei jeder Körper (52, 60) mit dem Gehäuse (14) lösbar verbunden ist.

4. Elektrische Anordnung (10) nach Anspruch 2 oder 3, wobei jeder Körper eine Platte (60) ist, die eine zweidimensionale Gitterzellenstruktur (62) enthält.

5. Elektrische Anordnung (10) nach Anspruch 4, wobei die Platten (60) in einem Stapel angeordnet sind, um die dreidimensionale Gitterzellenstruktur (22) zu bilden.

6. Elektrische Anordnung (10) nach einem der vorhergehenden Ansprüche, wobei die dreidimensionale Gitterzellenstruktur (22) eine dreifach periodische im Wesentlichen minimale Oberfläche aufweist.

7. Elektrische Anordnung (10) nach einem der vorhergehenden Ansprüche, wobei die dreidimensionale Gitterzellenstruktur (22) nicht ebene, strömungsbegünstigende Enden (42) aufweist.

8. Elektrische Anordnung (10) nach einem der vorhergehenden Ansprüche, wobei der Wärmetauscher (12) zwei dreidimensionale Gitterzellenstrukturen (22) enthält, die parallel zueinander angeordnet sind, und wobei jede dreidimensionale Gitterzellenstruktur (22) dafür ausgelegt ist, das Kühlungsfluid (16) von dem Gehäuse (14) zu einer Außenseite des Gehäuses (14) für einen Wärmeaustausch mit einem umgebenden Fluid (20) und zurück zu dem Gehäuse (14), um die elektrische Komponente (18) zu kühlen, zu leiten.

9. Elektrische Anordnung (10) nach einem der vorhergehenden Ansprüche, wobei der Wärmetauscher (12) ferner Rohre (44) enthält, um das umgebende Fluid (20) durch die dreidimensionale Gitterzellenstruktur (22) zu leiten.

10. Elektrische Anordnung (10) nach einem der vorhergehenden Ansprüche, wobei der Wärmetauscher (12) eine Führungsstruktur (48) innerhalb der dreidimensionalen Gitterzellenstruktur (22) aufweist, wobei die Führungsstruktur (48) dafür ausgelegt ist, das Kühlungsfluid (16) längs eines definierten Pfades (50) innerhalb der dreidimensionalen Gitterzellenstruktur (22) zu führen.

11. Elektrische Anordnung (10) nach einem der vorhergehenden Ansprüche, die ferner eine Pumpenanordnung (58) umfasst, die dafür ausgelegt ist, eine Strömung des Kühlungsfluids (16) durch die dreidimensionale Gitterzellenstruktur (22) zu erzeugen.

12. Elektrische Anordnung (10) nach einem der vorhergehenden Ansprüche, die ferner eine Gebläseanordnung (38, 40, 68) umfasst, die dafür ausgelegt ist, eine Strömung des umgebenden Fluids (20) in der dreidimensionalen Gitterzellenstruktur (22) zu erzeugen.

13. Elektrische Anordnung (10) nach Anspruch 12, wobei die Gebläseanordnung (38, 40, 68) dafür ausgelegt ist, eine Strömung des umgebenden Fluids (20) in der dreidimensionalen Gitterzellenstruktur (22) in wenigstens zwei unterschiedlichen Richtungen zu erzeugen.

## Revendications

1. Agencement électrique (10), comprenant :
- un boîtier (14) ;
- un composant électrique (18), générant de la chaleur, agencé à l'intérieur du boîtier (14) ; et
- un échangeur de chaleur (12) comprenant une structure cellulaire réticulaire tridimensionnelle (22), la structure cellulaire réticulaire tridimensionnelle (22) étant agencée pour conduire un fluide de refroidissement diélectrique (16) depuis le boîtier (14) sur un côté extérieur du boîtier (14) pour échange de chaleur avec un fluide ambiant (20), et de retour vers le boîtier (14) pour refroidissement du composant électrique (18).

2. Agencement électrique (10) selon la revendication 1, dans lequel l'échangeur de chaleur (12) comprend une pluralité de corps (52, 60), chaque corps (52, 60) comprenant une structure cellulaire réticulaire tridimensionnelle (22) ou une structure réticulaire bidimensionnelle (62).

3. Agencement électrique (10) selon la revendication 2, dans lequel chaque corps (52, 60) est relié de façon amovible au boîtier (14).

4. Agencement électrique (10) selon la revendication 2 ou 3, dans lequel chaque corps est un panneau (60) comprenant une structure cellulaire réticulaire bidimensionnelle (62).

5. Agencement électrique (10) selon la revendication 4, dans lequel les panneaux (60) sont agencés en un empilement pour former la structure cellulaire réticulaire tridimensionnelle (22).

6. Agencement électrique (10) selon l'une quelconque des revendications précédentes, dans lequel la structure cellulaire réticulaire tridimensionnelle (22) comprend une surface sensiblement minimale triplement périodique.

7. Agencement électrique (10) selon l'une quelconque des revendications précédentes, dans lequel la structure cellulaire réticulaire tridimensionnelle (22) comprend des extrémités (42) non plates et favorisant l'écoulement.

8. Agencement électrique (10) selon l'une quelconque des revendications précédentes, dans lequel l'échangeur de chaleur (12) comprend deux structures cellulaires réticulaires tridimensionnelles (22) agencées en parallèle, et dans lequel chaque structure cellulaire réticulaire tridimensionnelle (22) est agencée pour conduire le fluide de refroidissement (16) depuis le boîtier (14) sur le côté extérieur du boîtier (14) pour échange de chaleur avec un fluide ambiant (20), et de retour vers le boîtier (14) pour refroidissement du composant électrique (18).

9. Agencement électrique (10) selon l'une quelconque des revendications précédentes, dans lequel l'échangeur de chaleur (12) comprend en outre des tuyaux (44) pour conduire le fluide ambiant (20) à travers la structure cellulaire réticulaire tridimensionnelle (22).

10. Agencement électrique (10) selon l'une quelconque des revendications précédentes, dans lequel l'échangeur de chaleur (12) comprend une structure de guidage (48) à l'intérieur de la structure cellulaire réticulaire tridimensionnelle (22), la structure de guidage (48) étant agencée pour guider le fluide de refroidissement (16) le long d'un chemin défini (50) à l'intérieur de la structure cellulaire réticulaire tridimensionnelle (22).

11. Agencement électrique (10) selon l'une quelconque des revendications précédentes, comprenant en outre un agencement de pompe (58) agencé pour générer un écoulement du fluide de refroidissement (16) à travers la structure cellulaire réticulaire tridimensionnelle (22) .

12. Agencement électrique (10) selon l'une quelconque des revendications précédentes, comprenant en outre un agencement de ventilateur (38, 40, 68) agencé pour générer un écoulement du fluide ambiant (20) dans la structure cellulaire réticulaire tridimensionnelle (22).

13. Agencement électrique (10) selon la revendication 12, dans lequel l'agencement de ventilateur (38, 40, 68) est agencé pour générer un écoulement du fluide ambiant (20) dans la structure cellulaire réticulaire tridimensionnelle (22) dans au moins deux directions différentes.
